# EUROPÄISCHE PATENTSCHRIFT

(11) **EP 3 338 877 B1**
(45) Veröffentlichungstag und Bekanntmachung des Hinweises auf die Patenterteilung: **15.10.2025**
(21) Anmeldenummer: 17207426.2
(22) Anmeldetag: 14.12.2017
(51) Int. Cl.: B01D 61/14, B01D 61/16, B01D 61/18, B01D 65/02

(54) **VERFAHREN UND VORRICHTUNG ZUM FILTERN EINES EINE VERSCHMUTZUNG ENTHALTENDEN ROHFLUIDS MITTELS MINDESTENS EINER MEMBRANFILTEREINHEIT SOWIE EINE VERWENDUNG HIERZU**
METHOD AND DEVICE FOR FILTERING A RAW FLUID CONTAINING CONTAMINATION BY MEANS OF AT LEAST ONE MEMBRANE FILTER UNIT AND USE THEREOF
PROCÉDÉ ET DISPOSITIF DE FILTRATION D'UN FLUIDE BRUT CONTENANT UNE IMPURETÉ AU MOYEN D'AU MOINS UNE UNITÉ DE FILTRE À MEMBRANE AINSI QUE LEUR UTILISATION

(30) Priorität: 22.12.2016 DE 102016125482
(43) Veröffentlichungstag der Anmeldung: 27.06.2018
(73) Patentinhaber: Strecker Wassertechnik GmbH, 78532 Tuttlingen-Nendingen (DE)
(72) Erfinder: Strecker, Dirk, 78532 Tuttlingen-Nendingen (DE)
(74) Vertreter: Sebastian, Jens

(56) Entgegenhaltungen:
- EP-A1- 0 803 274
- EP-A1- 2 554 245
- DE-A1- 102005 033 314
- FR-A1- 2 737 202

## Beschreibung

Die Erfindung betrifft ein Verfahren zum Filtern eines eine Verschmutzung enthaltenden Rohfluids mittels mindestens einer Membranfiltereinheit, gemäß Anspruch 1.

Auch betrifft die Erfindung eine Vorrichtung zum Filtern von Rohwasser mittels mindestens einer Membranfiltereinheit gemäß Anspruch 7.

Nicht zuletzt betrifft die Erfindung die Verwendung einer pulverförmigen Aktivkohle im Rohwasser in einer Vorrichtung und/oder einem Verfahren zum Filtern von Rohwasser mittels mindestens einer Membranfiltereinheit gemäß Anspruch 9.

Aus dem Stand der Technik sind allgemein Filterverfahren und Filtervorrichtungen bekannt.

Zum Filtern von Rohwasser, z.B. von Quellwasser, werden Filteranlagen mit Membranfiltern verwendet, bei denen das Rohwasser mittels einer Pumpe durch Membranfilterelemente gepumpt wird. Als Membranfilterelemente können röhrenförmige Membranen aus den verschiedensten Materialien dienen, deren Wandungsstärke z. B. 0,1 bis 1,0 mm und mehr betragen kann. Beim Durchdringen dieser dünnwandigen Membranen wird das Rohwasser von Schwebstoffen und Schmutzpartikeln sowie von Viren und Bakterien und dergleichen befreit, die sich an der Oberfläche der Membranen ablagern. Zum Reinigen der Membranen erfolgt dann in regelmäßigen Zeitabständen eine Rückspülung in der Art, dass bei herkömmlichen Filteranlagen mittels einer zusätzlichen Rückspülpumpe die Membranelemente mit Reinwasser entgegengesetzt zur Filtrierrichtung beaufschlagt werden. Dabei werden die abgelagerten Schmutzpartikel an den Membranelementen abgelöst und können über eine Abwasserleitung abgeleitet werden. Auch ist beispielsweise die Verwendung von Aktivkohle bei bestimmten Filteranlagen bekannt. Zudem ist aus der DE 10 2005 033 314 A1 ein Verfahren und eine Filteranlage zum Filtern von Rohwasser und zum Rückspülen von Membranfiltereinheiten bekannt, wobei wenigstens zwei Membranfiltereinheiten verwendet werden, mit denen im Filtrierbetrieb aus belastetem bzw. verschmutztem Rohwasser Reinwasser erzeugt wird, wobei im Rückspülbetrieb zur Reinigung der Membranfilterelemente diese entgegengesetzt zur Filtrierrichtung mit als Spülwasser verwendetem Reinwasser beaufschlagt werden. Über eine Pumpe wird wenigstens einer im Filtrierbetrieb arbeitenden Membranfiltereinheit Rohwasser zugeführt, wobei das von wenigstens einer Membranfiltereinheit erzeugte Reinwasser in Rückspülrichtung in die rückzuspülende Membranfiltereinheit eingeleitet und dann ausgangsseitig als Spülabwasser abgeführt wird.

Aus der FR 2 737 202 A1 ist eine Anlage zur biologischen Behandlung von Wasser bekannt, bei der das Wasser trinkbar gemacht wird. Die Anlage umfasst einen biologischen Reaktor, der über Mittel zum Einleiten eines sauerstoffhaltigen Gases verfüg, mindestens eine im Reaktor eingetauchte Trennmembran zum Mikro- oder Ultrafiltern, Biomasse, mindestens ein in Suspension befindlichen, pulverförmigen Stoff, der als Substrat für die Biomasse dient und Mittel zum Zuführen des pulverförmigen Stoffes im Inneren des Reaktors, wobei der Stoff ein reaktives Pulver sein kann, welches für die Biomasse erforderliches Substrat festhalten kann.

Es ist eine Aufgabe der vorliegenden Erfindung, ein Verfahren, eine Vorrichtung und eine Verwendung für ein verbessertes Filtern zu schaffen. Insbesondere ist es eine Aufgabe ein Verfahren zum Filtern von Rohwasser und zum Rückspülen von Membranfiltereinheiten zu schaffen, bei dem ein verbesserter Filtriervorgang und auch ein verbesserter Rückspülvorgang erzielt wird.

Diese und weitere Aufgaben werden gelöst durch ein Verfahren nach Anspruch 1, eine Vorrichtung nach Anspruch 7 und eine Verwendung nach Anspruch 9.

Vorteilhafte Weiterbildungen der Erfindung sind in den abhängigen Ansprüchen angegeben oder werden nachstehend im Zusammenhang mit der Beschreibung der Figuren angegeben.

Die Erfindung schließt die technische Lehre ein, dass bei einem Verfahren zum Filtern eines eine Verschmutzung enthaltenden Rohfluids mittels mindestens einer Membranfiltereinheit, vorgesehen ist, dass in einem Filterbetrieb das verschmutze Rohfluid von einer Rohfluidseite in eine Filterrichtung durch die Membranfiltereinheit zu einer Reinfluidseite gefördert wird, um so auf der Reinfluidseite ein von Verschmutzungen im Wesentlichen gereinigtes Reinfluid zu erzeugen, und in einem Rückspülbetrieb ein Spülfluid in eine Rückspülrichtung durch die Membranfiltereinheit gefördert wird, um die Membranfiltereinheit von der gefilterten Verschmutzung zu reinigen, wobei im Filterbetrieb ein zusätzliches Filtermittel dem Rohfluid auf der Rohfluidseite zugefügt wird, um das Filtern zu verbessern und wobei im Rückspülbetrieb zusätzlich scherkrafterhöhende Mittel, insbesondere Druckluft, in die Membranfiltereinheit eingeblasen wird, um im Rückspülbetrieb die Membranfiltereinheit von der Verschmutzung und dem zusätzlichen Filtermittel zu reinigen. Das Verfahren erfolgt dabei nach dem IN/OUT-Prinzip, welches im Folgenden noch näher beschrieben ist.

In der ersten Filterstufe wird ein Rohfluid einer Membranfiltereinheit in die Filterrichtung zugeführt. Dabei umfasst das Rohfluid neben einer ungewollten Verschmutzung noch ein zusätzliches Filtermittel, welches somit eine gewollte Verschmutzung darstellt. Das Rohfluid ist somit eine Kombination eines Reinfluids, welches das Endprodukt des Filtervorgangs darstellt, mit einer ungewollten Verschmutzung und einer gewollten Verschmutzung, insgesamt also ein Reinfluid plus Verschmutzung. Um das Rohfluid von der ungewollten Verschmutzung zu trennen, wird die gewollte Verschmutzung zugefügt. Die gewollte Verschmutzung ist somit auf die ungewollte Verschmutzung abgestimmt und unterstützt den Filtervorgang.

Das Rohfluid ist bevorzugt eine Rohflüssigkeit, genauer ein Rohwasser. Entsprechend ist das Reinfluid bevorzugt eine Reinflüssigkeit, genauer eine Reinwasser. Die - gewollte und/oder ungewollte - Verschmutzung ist ein Fluid, kann aber auch in Partikelform - lösbar oder unlösbar - in dem Rohfluid vorhanden sein.

Das Rohfluid wird der Membranfiltereinheit auf der Rohfluidseite zugeführt. Das zum Reinfluid gefilterte Rohfluid wird auf der Reinfluidseite der Membranfiltereinheit abgeführt. Die Verschmutzung verbleibt im Filterbetrieb in der Membranfiltereinheit. Die Verschmutzung des Reinfluids zum Rohfluid erfolgt bevorzugt zu unterschiedlichen Zeitpunkten. Ursprünglich ist das Reinfluid lediglich mit der ungewollten Verschmutzung verschmutzt. Dieses wird zeitlich versetzt mit der gewollten Verschmutzung kombiniert. Das so erzeugte Rohfluid wird über eine Fördereinheit, eine Pumpe, der Membranfiltereinheit zugeführt. Dabei ist der Druck, mit dem das Rohfluid der Membranfiltereinheit zugeführt wird, beliebig wählbar.

Die Membranfiltereinheit filtert die Verschmutzung aus dem Rohfluid heraus. Um einen reibungslosen Filtervorgang zu gewährleisten, muss die Membranfiltereinheit bei entsprechender Verschmutzung gereinigt werden. Dies erfolgt mittels Rückspülung. Dabei wird ein (Rück-)Spülfluid in eine Spülrichtung in die Membranfiltereinheit gefördert. Die Spülrichtung ist dabei entgegengesetzt zu der Filterrichtung. Das Spülfluid kann ein beliebiges Fluid sein, welches zum Reinigen der Membranfiltereinheit geeignet ist. Vorzugsweise ist das Spülfluid als Reinfluid, vorzugsweise in flüssiger Form, insbesondere als Reinwasser ausgebildet.

Um den Rückspülvorgang zu verbessern, wird zusätzlich zu dem Reinfluid ein scherkrafterhöhendes Mittel der Membranfiltereinheit zugeführt. Als scherkrafterhöhendes Mittel wird Druckluft verwendet. Insofern wird im Folgenden statt scherkrafterhöhende Mittel kürzer Druckluft verwendet. Das Zuführen der Druckluft erfolgt von der Rohwasserseite her. Somit wirkt im Rückspielvorgang die Druckluft in Filterrichtung und das Spülfluid entgegengesetzt in Spülrichtung. Für ein verbessertes Rückspülen sind der Druck des Spülfluids und der Druckluft aufeinander abgestimmt. Vorzugsweise ist das Verhältnis von Spülfluiddruck und Druckluft-Druck mindestens etwa 25:75, bevorzugt etwa 50:50. Durch die zusätzliche Verunreinigung des Rohfluids mit einer gewollten Verschmutzung, dem zusätzlichen Filtermittel, ist eine Abstimmung der Drücke erforderlich. Durch das Zuführen der Druckluft wirken auf die an und/oder in der Membranfiltereinheit befindliche Verschmutzung zusätzliche Scherkräfte ein, welche zusammen mit der Wirkung des Spülfluids ein verbessertes Lösen der Verschmutzung von der Membranfiltereinheit bewirken. Die von der Membranfiltereinheit gelöste Verschmutzung wird mit dem Spülfluid und der Druckluft über eine entsprechende Ableitung aus der Membranfiltereinheit abgeführt. Dieses Abführen des nun verunreinigten Spülfluids erfolgt auf einer Ableitungsseite. Das einst für die Reinigung unverschmutzte Spülfluid umfasst nun die gefilterte gewollte und ungewollte Verschmutzung.

Bei einer im Wesentlichen vertikalen Ausrichtung der Membranfiltereinheit bewirkt die Druckluft zudem ein entgegen der Schwerkraft gerichtetes Auftreiben der Verschmutzung, sodass diese sich leicht an einem oberen Ende der Membranfiltereinheit von dieser entfernen lässt. Der Rest der Membranfiltereinheit bleibt somit von dem nicht oder kaum verschmutzten Spülfluid umspült bzw. umgeben.

Beim Rückspülvorgang wird die Zufuhr mit Rohfluid unterbrochen. Nach erfolgtem Rückspülen kann dann wieder in einen Filterbetrieb gewechselt werden. Das Filterverfahren lässt sich parallel mittels mehrerer Filtervorrichtungen durchführen. Die Filterverfahren können dabei zeitlich versetzt ausgeführt werden, sodass in einem Vorgang gefiltert wird und in dem parallelen Vorgang rückgespült wird. Die Vorgänge können derart gekoppelt sein, dass Reinfluid aus dem einen Vorgang während des Filterns abgezweigt bzw. genutzt wird, um in dem parallelen Vorgang das Rückspülen durchzuführen. Durch parallele Durchführung des Verfahrens, insbesondere zeitversetzt, lässt sich somit ein quasikontinuierlicher Filterbetrieb realisieren. Das Verfahren lässt sich somit diskontinuierlich und (quasi-)kontinuierlich durchführen.

Als zusätzliches Filtermittel wird pulverförmige Aktivkohle zugefügt. Aktivkohle einigt sich besonders zum Filtern von chemikalischen Verschmutzungen. Die Verschmutzung haftet an der Aktivkohle an und verbleibt in der Membranfiltereinheit. Das Filtermittel wird in Pulverform zugeführt. Auf diese Weise ist die Wirkoberfläche des Filtermittels optimiert für ein verbessertes Filtern. Besonders bevorzugt ist somit die Zugabe von pulverförmiger Aktivkohle. Bei Verwendung einer Membranfiltereinheit kann das Filtermittel bzw. die Verschmutzung oder können die Verschmutzung und die Filtermittel in Poren der in der Membranfiltereinheit verwendet Membranfilterelemente eindringen. Trotzdem sieht eine bevorzugte Ausführungsform der vorliegenden Erfindung vor, dass eine Körner- oder Partikelgröße des pulverförmigen Filtermittels derart bemessen ist, dass diese in die Poren der Membranfilterelemente eindringen können. Durch eine kleinere Körnergröße ist eine Wirkoberfläche der zugegebenen Menge an Filtermittel optimiert. Größere Körnergrößen bewirken ein vorwiegendes Anhaften an der Außenseite der Membranfilterelemente. Die kleineren Körnergrößen bewirken ein zumindest teilweises Eindringen in die Membranporen. Durch dieses Zusetzen ist ein verbesserter Rückspülvorgang erforderlich. Bei herkömmlichen Rückspülvorgängen ist eine derartige kleine Körnergröße nicht möglich, da das Zusetzen der Membranporen nicht ausreichend durch das Rückspülen rückgängig gemacht werden kann. Erfindungsgemäß wird deshalb beim Rückspülen das scherkrafterhöhende Mittel, Druckluft, zugeführt. Um eine optimale Spülwirkung zu erzielen, ist der Druck von Spülfluid und Druckluft aufeinander abgestimmt. Zudem sind die Körnergröße und die Membranporengröße aufeinander abgestimmt. Durch Einstellen und Abstimmen der vorgenannten Parameter ist ein optimaler Filter- und Rückspülvorgang realisierbar.

In einer weiteren Ausführungsform ist vorgesehen, dass im Rückspülbetrieb die Verschmutzung samt zusätzlichem Filtermittel mit dem Spülfluid und/oder dem scherkrafterhöhenden Mittel bzw. der Druckluft aus der Membranfiltereinheit in mindestens eine weitere Filterstufe gefördert und dort gefiltert werden, sodass dort wieder Reinwasser entsteht. Auf diese Weise lässt sich ein mehrstufiges Filterverfahren realisieren, in welchem die in dem ausgespülten, verschmutzten Spülmittel vorhandene Aktivkohle bzw. allgemein Filtermittel, dessen Wirkung für mehrere Filtervorgänge vorhanden ist, weiter genutzt werden kann.

Die Verschmutzung samt Spülfluid und/oder scherkrafterhöhenden Mittel wird durch geeignete Mittel aufgefangen und abgeführt. Zum Auffangen ist vorzugsweise ein entsprechendes Sammelgefäß vorgesehen. Das scherkrafterhöhende Mittel, die Druckluft, bewirkt in dem Spülfluid ein Aufsteigen, also ein Bewegen entgegen die Schwerkraft, der Verschmutzung. Entsprechend wird die Verschmutzung an einem oberen Ende der zu spülenden Membranfiltereinheit aufgefangen. In dem oberen Bereich, beispielsweise an dem Sammelgefäß, ist eine Abführleitung angebracht, die über entsprechende Stellglieder, genauer über Ventile, sperrbar ist. Im Rückspülbetrieb werden die entsprechenden Stellglieder geöffnet und die Verschmutzung abgeführt. Das verunreinigte Spülfluid wird zu einer weiteren Filterstufe abgeführt. Die weitere Filterstufe ist analog zu der ersten Filterstufe aufgebaut. In der zweiten Filterstufe wird das verschmutzte Spülfluid analog dem Rohwasser in der ersten Filterstufe über ein Zuführleitung einer Membranfiltereinheit oder mehreren Membranfiltereinheiten zugeführt, ggf. unter Zusatz von Aktivkohle. In der zweiten Filterstufe kann die Zufuhr von Aktivkohle oder einem anderen Filtermittel reduziert sein, da sich in dem verunreinigten Spülfluid bereits das zusätzliche Filtermittel befindet. Das verunreinigte Spülfluid wird durch die Membranfiltereinheit(en) gefördert und auf der Reinfluidseite wird von Verunreinigungen befreites Reinwasser in dem Filterbetrieb erhalten. Auch die zweite Filterstufe ist von einem Filterbetrieb in einen Rückspülbetrieb umschaltbar. In dem Rückspülbetrieb wird analog zu der ersten Filterstufe ein Spülfluid entgegen der Filterrichtung, somit in Rückspülrichtung, durch die Membranfiltereinheit(en) gefördert. Als Spülfluid kann das in einer der Filterstufen erzeugte Reinwasser oder ein separat zugeführtes oder erzeugtes Spülfluid verwendet werden. Je nachdem, ob weitere Filterstufen, die analog aufgebaut sind, vorgesehen werden, schließen sich entsprechende Filtervorgänge an.

Entsprechend ist in einer Ausführungsform vorgesehen, dass das Filtern und Rückspülen in der mindestens einen weiteren Filterstufe wie in der ersten Filterstufe durchgeführt wird. Es lassen sich auf diese Weise beliebig viele Filterstufen aneinanderreihen. Dabei lässt sich das gewonnene Reinfluid und/oder Spülfluid über entsprechende Leitungen mit Spülfluid und/oder Reinwasser unterschiedlicher Filterstufen fluidisch verbinden. Ebenso lässt sich das Rohfluid und/oder das verunreinigte Spülfluid mit dem Rohfluid und/oder dem verunreinigten Spülfluid anderer Filterstufen über entsprechende Leitungssysteme fluidisch verbinden. Steuern lässt sich das Koppeln von Spül-/Rein-/Rohfluid über entsprechende Stellglieder wie Ventile, Pumpen und dergleichen.

In noch einer anderen Ausführungsform ist vorgesehen, dass die in einer weiteren Filterstufe entstandene Verschmutzung einschließlich zusätzlichem Filtermittel samt Spülfluid und scherkrafterhöhendem Mittel, insbesondere Druckluft, in einem Sedimentationsbehälter sedimentiert werden, sodass ein Sedimentschlamm entsteht. Bevorzugt findet das Sedimentieren in einer letzten Filterstufe statt, kann aber auch in Zwischenfilterstufen durchgeführt werden. Das verunreinigte Spülfluid wird in einen oder mehrere Sedimentationsbehälter gefördert. Dort wird das verunreinigte Spülfluid beruhigt bzw. ruhen gelassen, sodass die Verunreinigung sich in dem Sedimentationsbehälter absetzen kann. Die abgesetzte Verunreinigung bildet einen Sedimentschlamm. Der Sedimentschlamm wird dem Sedimentationsbehälter mit geeigneten Mitteln entnommen bzw. abgeführt. Der abgeführte Sedimentschlamm kann nun auf vielfältige Art weiter verwendet werden. Je nach Filterstufe lässt sich der Sedimentschlamm beispielsweise dem Rohwasser einer vorderen Filterstufe zuführen. Die in dem Sedimentschlamm enthaltende Aktivkohle bzw. allgemeine das dort enthaltende zusätzliche Filtermittel lässt sich so in einer vorderen Filterstufe verwenden. Dies ist insbesondere förderlich, da auch in der Sediment-Filterstufe die Aktivkohle ihre Filterwirkung nicht vollständig verloren hat und sich so diese Wirkung weiter nutzen lässt. Auf diese Weise lässt sich ein umweltfreundlicher Filterkreislauf realisieren.

Entsprechend sieht eine bevorzugte Ausführungsform vor, dass der Sedimentschlamm dem Rohfluid einer vorderen Filterstufe zugeführt wird. Das Zuführen von Sedimentschlamm, Rohfluid, Spülfluid, zusätzlichem Filtermittel und/oder scherkrafterhöhenden Mitteln erfolgt unter vorgegebenen Parametern, wie Mengenverhältnis, Druckverhältnis und/oder Temperaturverhältnissen. Das Zuführen erfolgt je nach Filterstufe unter vorzugegebenen Mengen und/oder Druckverhältnissen, die entsprechend aufeinander abgestimmt sind. So erfolgt das Zuführen der Druckluft bzw. des scherkrafterhöhenden Mittels und des Spülfluids in einem Rückspülbetrieb in einem Druckverhältnis zueinander, bei dem der Druck des scherkrafterhöhenden Mittels den Druck des Spülfluids nicht um mehr als 30%, bevorzugt nicht um mehr als 20% und am meisten bevorzugt von nicht mehr als 10% übersteigt. Auf diese Weise ist gewährleistet, dass im Rückspülbetrieb das verunreinigte Spülfluid in das Sammelgefäß aufsteigt und sich die Verschmutzung entsprechend optimiert abführen lässt.

Die Erfindung schließt die technische Lehre ein, dass bei einer Vorrichtung zum Filtern von Rohfluid mittels mindestens einer Membranfiltereinheit, vorgesehen ist, dass die Vorrichtung Mittel zur Durchführung eines vorstehend beschriebenen Verfahrens aufweist, insbesondere eine Filterstufe mit mindestens einer Membranfiltereinheit, die auf einer Rohfluidseite mit einer Rohfluidzuführung fluidisch verbunden ist und die ausgebildet ist, in einem Filterbetrieb Rohfluid in Filterrichtung durch die Membranfiltereinheit zu fördern, um so auf einer Reinfluidseite Reinfluid zu erzeugen, und die auf der Reinfluidseite mit einer Spülfluidzuführung fluidisch verbunden ist und die ausgebildet ist, in einem Rückspülbetrieb Spülfluid in eine Rückspülrichtung durch die Membranfiltereinheit zu fördern, um die Membranfiltereinheit von gefilterten Schmutzpartikeln zu reinigen, wobei weiter eine Zuführung zum Zuführen von scherkrafterhöhenden Mitteln, insbesondere eine Druckluftzuführung, vorgesehen ist, die ausgebildet ist, um im Rückspülbetrieb scherkrafterhöhende Mittel einzublasen, wobei weiter eine Mittelzuführung vorgesehen ist, die ausgebildet ist, um in dem Filterbetrieb ein zusätzliches Filtermittel dem Rohfluid zuzufügen, um das Filtern zu verbessern. Die Vorrichtung ist für einen Filterbetrieb gemäß des IN/OUT-Prinzips ausgelegt.

Die Membranfiltereinheit weist mindestens ein Membranfilterelement mit Membranporen auf, durch welches das Rohfluid gefördert wird und in dessen Membranporen oder an deren Membranoberflächen sich Schmutzpartikel ansammeln.

Auf der Rohfluidseite werden im Filterbetrieb Rohfluid und ein zusätzliches Filtermittel, pulverförmige Aktivkohle, zugefügt, um diese durch die Membranfiltereinheit zu fördern.

Noch eine weitere Ausführungsform sieht vor, dass mehrere miteinander gekoppelte Filterstufen vorgesehen sind, deren korrespondierende Reinfluidseiten und/oder Rohfluidseiten zumindest teilweise miteinander gekoppelt oder koppelbar sind.

Nicht zuletzt schließt die Erfindung die technische Lehre ein, dass eine Verwendung einer pulverförmigen Aktivkohle im Rohfluid in einer Vorrichtung und/oder einem Verfahren zum Filtern von Rohfluid mittels mindestens einer Membranfiltereinheit, die mindestens ein Membranelement mit Membranporen aufweist, durch welche das Rohfluid zum Filtern gefördert wird, wobei die Membranfiltereinheiten mittels Rückspülverfahren unter Zufuhr von scherkrafterhöhenden Mitteln, insbesondere Druckluft gereinigt werden, vorgesehen ist.

Das scherkrafterhöhende Mittel ist Druckluft. Die Druckluft weist zumindest beim Einblasen einen Druck auf, der bevorzugt in einem Bereich von etwa größer gleich 0,2 bar bis etwa kleiner gleich 2,0 bar, beispielsweise bei etwa 0,5 bar, etwa 1,0 bar und weiter bevorzugt etwa bei 1,5bar, am meisten bevorzugt kleiner gleich 2,5 bar.

Das zusätzliche Filtermittel ist pulverförmige Aktivkohle.

Insbesondere ist das zusätzliche Filtermittel mit einer Körnergröße ausgebildet, die derart ausgebildet ist, dass die Pulverkörner bzw. die Aktivkohle in Membranporen der Membranfiltereinheit eindringen können. Vorzugsweise ist das zusätzliche Filtermittel als pulverförmige Aktivkohle ausgebildet.

In einer Ausführungsform umfasst die Vorrichtung, die insbesondere als Filteranlage ausgebildet ist, eine Membranfiltereinheit. Bevorzugt weist die Vorrichtung wenigstens zwei Membranfiltereinheiten auf. Die Membranfiltereinheiten können in einer Filterstufe oder in unterschiedlichen Filterstufen angeordnet sein. Dabei können die Membraneinheiten gleich ausgebildet sein. In einer anderen Ausführungsform sind die Membranfiltereinheiten unterschiedlich ausgebildet. Insbesondere sind Membranfiltereinheiten in unterschiedlichen Filterstufen unterschiedlich ausgebildet. Im Filtrierbetrieb wird Rohwasser als Rohfluid durch die Membranfiltereinheiten gepumpt, während im Rückspülbetrieb zumindest eine der Membranfiltereinheiten vom Filtrierbetrieb abgekoppelt wird. In einer Ausführungsform wird eine separate Zufuhr von Spülfluid vorgesehen. Dieser abgekoppelten Membranfiltereinheit wird das von der anderen oder den anderen Membranfiltereinheiten erzeugte Reinwasser als Spülfluid in Rückspülrichtung zugeführt, so dass die Schmutzpartikel oder Verunreinigung an den Membranfilterelementen abgelöst und über eine Abwasserleitung abgeleitet werden können. Es wird in der Ausführungsform keine zusätzliche Rückspülpumpe benötigt. In anderen Ausführungsformen erfolgt das Rückspülen über eine separate Rückspülpumpe. Bei einsprechender Auslegung der Filteranlage kann mit diesem Verfahren auch ohne Unterbrechung des Filtrierbetriebs eine Rückspülung einzelner Membranfiltereinheiten nacheinander durchgeführt werden, damit in einem quasi-kontinuierlichen Verfahren. Besonders vorteilhaft ist es, beim Rückspülvorgang durch Einblasen von Druckluft auf der Rohfluidseite bzw. der Rohwasserseite die Ablösung der Schmutzpartikel an den einzelnen Membranfilterelementen zu unterstützen. Insbesondere bei einem zusätzlichen Filtermittel wie pulverförmiger Aktivkohle ist eine Unterstützung förderlich. Zur Durchführung des Verfahrens werden bevorzugt mehrere Membranfiltereinheiten verwendet, die nacheinander einzeln oder mehrere gemeinsam rückgespült werden, während sämtlich anderen Membranfiltereinheiten im normalen Filterbetrieb arbeiten. Versuche haben auch gezeigt, dass das Einblasen von Druckluft -- auch im Filtrierbetrieb -- sehr vorteilhaft ist, da dadurch ein zu schnelles Verschmutzen der Membranfilterelemente verhindert werden kann. Bevorzugt erfolgt das Einblasen des scherkrafterhöhenden Mittels, von Druckluft, ausschließlich im Rückspülbetrieb. Durch die eingeblasene Druckluft werden Schmutzablagerungen leichter gelöst und auch von den Membranfilterelementen abgelöst und können sich in einer oberen Kammer der Membranfilterelemente sammeln, von wo sie dann beim Rückspülvorgang über die Abwasserleitung abgeführt werden können. Die Filteranlage gemäß einer Ausführungsform weist wenigstens zwei Membranfiltereinheiten auf, die einen Filtrierbetrieb und einen Rückspülbetrieb mit nur einer einzigen Pumpe, in anderen Ausführungsformen mit mehreren Pumpen, ermöglicht. Zum Rückspülen einer oder mehrerer Membranfiltereinheiten wird das von einer oder mehreren anderen Membranfiltereinheiten erzeugte Reinwasser als Spülfluid, genauer als Spülwasser, verwendet, in dem dieses Spülwasser in Rückspülrichtung in die rückzuspülende Membranfiltereinheit eingeleitet wird. Zu diesem Zweck sind entsprechende Absperrventile vorgesehen. Die zu den Membranfiltereinheiten von der Pumpe oder den Pumpen führenden Zufuhrleitungen besitzen separate Absperrventile und auch die von den Membranfiltereinheiten zur Abwasserleitung führenden Ablaufleitungen haben jeweils separate Absperrventile. In Verbindung mit einem zusätzlichen Absperrventil in der ausgangsseitigen Reinfluid- oder Reinwasserleitung wird ermöglicht, dass das in der Filteranlage erzeugte Reinwasser zum Rückspülen einzelner Membranfiltereinheiten genutzt werden kann. Mittels eines Luftkompressors kann über separat abstellbare Druckluftleitungen im Bereich der Rohwasserzufuhr bzw. der Rohwasserseite Druckluft in die Membranfiltereinheiten eingeblasen werden, wodurch sich zumindest im Rückspülbetrieb in sehr vorteilhafter Weise eine Ablösung von Schmutzpartikeln an den Membranfilterelementen ergibt. Die Membranfilterelemente der Membranfiltereinheiten können röhrenförmige oder anders geformte Elemente sein, die von innen nach außen oder umgekehrt beim Filtriervorgang durchströmt werden können. Dabei können die Membranfilterelemente beispielsweise in zylindrischen, vertikal ausgerichteten Druckbehältern eingesetzt sein, die die Membranfiltereinheiten der Filteranlage bilden. An einer oberen Kammer können Ablaufleitungen über Absperrventile mit einer gemeinsamen Abwasserleitung zum Abführen des rückgespülten Spülwassers angeschlossen sein. Diese obere Kammer mit den Membranfiltereinheiten kann über ein automatisches Entlüftungsventil entlüftet werden.

Der Filtervorgang erfolgt nach dem sogenannten IN/OUT-Prinzip. Dabei wird von innen nach außen filtriert. Entsprechend wird dem Rohwasser oder Rohfluid Pulveraktivkohle vor einer Rohwasserpumpe, Zuführpumpe oder Feedpumpe hinzudosiert. Zeitlich danach trifft das gemischte Medium, also Rohwasser plus Aktivkohle, auf die Membrane der Membranfiltereinheit, also die Filtereinheit der ersten Filterstufe. Im Filtrationsprozess wird bevorzugt keine Druckluft oder ein anderes scherkrafterhöhendes Mittel hinzugegeben. Im Rückspülbetrieb, d.h. bei der Rückspülung wird das zuvor aufbereitete Wasser (Filtrat, Reinwasser oder allgemein Reinfluid) zur Rückspülung als Spülfluid oder Spülwasser verwendet. Die Verwendung des erzeugten Reinwassers weist den Vorteil auf, dass was Reinwasser einmal in die Filterrichtung durch die Membranfiltereinheit durchging, geht dieses problemlos in umgekehrte Richtung, d.h. in Rückspülrichtung, auch wieder durch die Membranfiltereinheit zurück. Um die Rückspülung zu intensivieren, wird in einen unteren Bereich der Membranfiltereinheit, genauer unten in die Membrane im Modulfuß Luft, genauer Druckluft, als scherkrafterhöhendes Mittel eingeblasen und von außen nach innen (OUT/IN) wird das Spül- oder Reinwasser (Filtrat) in die Membraneinheit hineingedrückt. Die Druckluft erzeugt dabei eine Scherwirkung im Bereich der an der Membranelementen sich befindenden Verschmutzung und löst die Verschmutzung dadurch leichter von der Membranfiltereinheit. Der durch die Luft und das Rückspülwasser abgetragene Schmutz steigt zusammen nach oben, somit entgegen der Schwerkraft, in einen Modulkopf. Von dort wird das verunreinigte Spülfluid abgeführt, vorzugsweise seitlich abgeleitet. Luft wird bevorzugt nur bei der Rückspülung verwendet und wird unten in die Membrane, genauer in deren Modulfuß, eingeblasen.

Entsprechend ist die Vorrichtung zum Filtern für eine Filtration nach dem IN/OUT-Verfahren, also von innen nach außen, und für eine Rückspülung nach dem OUT/IN-Verfahren, also von außen nach innen, ausgelegt. Bei der Filtration wird das Rohfluid von innen nach außen filtriert. Hierzu weist die Vorrichtung einen Modulfuß auf. Dieser ist u.a. zur Einleitung von Spülluft und von Rohwasser ausgebildet. In fluidischer Verbindung mit dem Modulfuß ist ein Modulgehäuse vorgesehen. Dieses ist etwa als Hohlzylinder ausgebildet. In dessen Innenraum ist die Membranfiltereinheit mit den Membranfilterelementen angeordnet. Dabei sind die Membranfilterelmente derart angeordnet, dass Rohwasser oder Rohfluid von dem Modulfuß in die Membranfilterelemente eingeleitet wird. Die Membranfilterelemente sind etwa rohrförmig ausgebildet. Das Rohfluid wird bei der Filtration von dem Modulfuß ausschließlich in die Membranfilterelemente eingeleitet. Von da drängt das Rohfluid durch die Poren nach außen. Die Verunreinigung bleibt an der Innenseite der Membranfilterelemente und/oder an der Innenseite der Poren haften. Die gereinigte Rohfluid drängt durch die Poren nach außen. Bei Zugabe von einem Filtermittel wie Aktivkohle wird diese ebenfalls durch den Modulfuß in die Filterelemente mit dem Rohfluid bewegt. Bei dem Durchtritt durch die Poren bleibt das Filtermittel an der Innenseite der Membranfilterelemente und/oder an der Innenseite der Poren haften, ebenso wie die Verschmutzung. Der Modulfuß weist einen Rohwasserzulauf und einen Spülluftzulauf auf. Beide münden in eine gemeinsame Kammer des Modulfußes. Von dieser Kammer gelangt beispielsweise das Rohfluid über eine perforierte Trennwand zu den Filterelementen. Die Trennwand ist derart perforiert, dass der durch die Perforation realisierte Durchlass in die Filterelemente, genauer den Hohlraum der Filterelemente führt. Da die Kammer sowohl für das Rohfluid als auch für Spülluft geeignet ist, gilt gleiches für die Spülluft. Die Trennwand verbindet fluidisch die Kammer mit dem Innenraum der Filterelemente bzw. Membranfilterelemente. Nach Durchdritt durch die Poren der Membranfilterelemente gelangt das gereinigte Rohfluid in den Innenraum des hohlzylindrischen Modul-Gehäuses, in dem auch die Membranfiltereinheit angeordnet ist. Über einen Reinwasserabfluss gelangt das gereinigte Fluid aus dem Innenraum hinaus. Das Spülabwasser wird aus den Membranfilterelementen über entsprechende Spülabwasserleitungen abgeführt. Hierzu sind die Membranfiltereinheiten fluidisch mit einem Modulkopf verbunden. Dieser weist Durchlässe zu dem Hohlraum der Membranfilterelemente auf, sodass das Spülabwasser durch die Durchlässe von dem Hohlraum zu der Spülabwasserleitung gelangt. Die Membranfilterelemente sind vorzugsweise als Kapillare ausgebildet. Aufgrund der Kapillarwirkung drängt das Rohfluid durch die Poren. Genauer sind die Kapillare als mit Kunstharz vergossene Kapillare ausgebildet. Dabei sind die Kapillare an Ihren Enden mit Kunstharz vergossen. In diesem Bereich gelangt Rohfluid nicht durch die Poren nach außen. Aufgrund der hohlzylindrischen Form der Filterelemente steht an der Innenseite nur wenig Oberfläche zur Ablagerung der Verunreinigung des Rohfluids zur Verfügung. Somit verstopfen bei einem IN/OUT - Filtrierverfahren die Poren schneller, als beispielsweise bei einem OUT/IN-Filtrierverfahren. Insofern wird allenfalls bei herkömmlichen Lösung ein OUT/IN-Verfahren mit zusätzlichem Filtermittel betrieben, da hier eine größere Membranoberfläche bereitgestellt ist, an welcher sich die Verschmutzung und das Filtermittel absetzten können.

Erfindungsgemäß wird das Verfahren aber im IN/OUT-Filtrierverfahren betrieben bzw. ist die Vorrichtung für ein IN/OUT-Verfahren ausgelegt. Bei dem Rückspülvorgang wird das Prinzip entsprechend umgekehrt. Dieses erfolgt erfindungsgemäß nach dem OUT/IN-Verfahren. Hier wird Spülfluid von außen über die Poren nach innen in die hohlen Membranfilterelemente gespült. Dieses Spülfluid wird über den Modulkopf in den Innenraum des Modulgehäuses geführt. Von dort gelangt es durch die Poren in den Hohlraum der Membranfilterelemente. Zusätzlich wird über den Modulfuß (von unten) Spülluft zugeführt. Die Spülluft gelangt von der Kammer des Modulfußes durch die Perforation der Trennwand in den Hohlraum der Membranfilterelemente. Das Spülwasser, welches die anhaftende Verschmutzung einschließlich Filtermittel (Aktivkohle) aufnimmt, wird über den Modulkopf abgeführt. Der Modulkopf ist ähnlich wie der Modulfuß ausgebildet, mit dem Unterschied, dass der Modulkopf eine von dem Spülwasserabfluss getrennte fluidische Verbindung mit dem Innenraum des Modulgehäuses aufweist. Der Modulfuß weist nur Durchlässe in den Hohlraum der Filterelemente auf. Der Modulkopf weist sowohl einen Durchlass zu dem Innenraum des Modulgehäuses auf als auch einen davon getrennten oder trennbaren Spülwasserabfluss. Der Spülwasserabfluss umfasst in dem Modulkopf eine Kammer, die über eine Trennwand fluidische Verbindung mit dem jeweiligen Hohlraum der Membranfilterelemente aufweist. Auf diese Weise gelangen das Spülabwasser und/oder die Spülluft über den Hohlraum zu dem Spülwasserabwasserabfluss. Getrennt davon gelangt das Reinwasser über die fluidische Verbindung von Innenraum und Reinwasserabfluss aus dem Innenraum hinaus. Der Reinwasserabfluss dient zugleich als Spülwasserzufluss. Die Flussrichtung von den Membranfilterelementen zu dem Spülwasserabfluss ist somit beim Filtrieren und Rückspülen gleich, während die Flussrichtung in dem Reinwasserablauf beim Filtrieren umgekehrt ist als beim Spülwasserzufluss. Die Flussrichtung im Modulfuss ist beim Filtern und beim Spülen stets die gleiche und führt in die Membranfiltereinheiten, genauer deren Hohlraum. Die Flussrichtung in den Poren ist beim Filtern und beim Spülen wiederum umkehrend bzw. unterschiedlich.

Zur Verbesserung des Filtervorgangs ist neben der vorstehend beschriebenen ersten Filterstufe mindestens eine weitere Filterstufe vorgesehen. Die weitere Filterstufe ist mit der vorherigen Filterstufe gekoppelt. In der weiteren Filterstufe wird das verunreinigte Rückspülwasser der vorherigen Filterstufe, d.h. das Gemisch aus allem, das in der vorherigen Filterstufe herausgefiltert wurde einschließlich der Pulveraktivkohle, nach einer vorbestimmten Zeit wieder aufbereitet. Das Filtrat (Reinwasser, Reinfluid oder auch Trinkwasser) aus der weiteren Filterstufe wird dem Rohwasser oder Rohfluid der vorherigen Filterstufe wieder hinzugegeben. Das verunreinigte Spülwasser wird analog zur ersten oder vorherigen Filterstufe abgeführt. Eine Filterstufe kann als Sedimentationsfilterstufe ausgebildet sein, vorzugsweise die letzte Filterstufe. Hier wird das verunreinigte Spülwasser einem Sedimentationsbehälter hinzugefügt. Der im Sedimentationsbehälter entstehende Schlamm, d.h. das Gemisch aus den vorherigen Spülprozessen, kann nun dem Rohwasser einer vorherigen Filterstufe, vorzugsweise der ersten Filterstufe hinzudosiert werden, so dass die Absorptionskraft der Pulveraktivkohle weiter ausgeschöpft werden kann. Auf diese Weise wird ein in sich schlüssiger Kreislauf geschaffen.

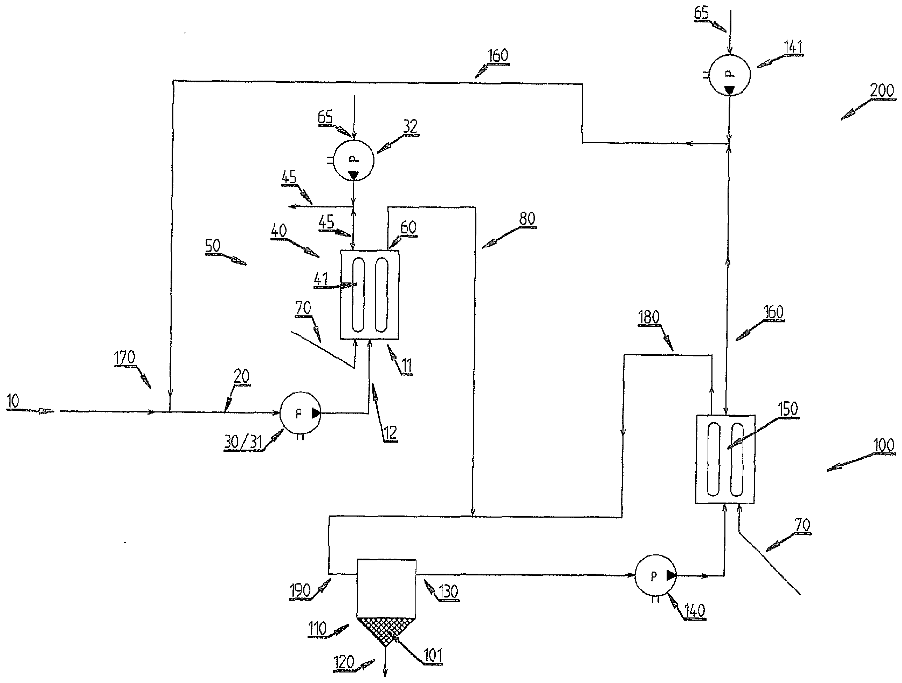

Weitere, die Erfindung verbessernde Maßnahmen sind in den Unteransprüchen angegeben oder ergeben sich aus der nachfolgenden Beschreibung von mindestens einem Ausführungsbeispiel der Erfindung, welches in der Figur schematisch dargestellt ist. In den Figuren werden gleiche oder ähnliche Bauteile mit gleichen oder ähnlichen Bezugszeichen gekennzeichnet.

Es zeigt:
- Fig.: schematisch eine Ausführungsform einer Filtervorrichtung zur Durchführung des erfindungsgemäßen Filterverfahrens

Die Fig. zeigt schematisch eine Ausführungsform einer Filtervorrichtung 100 zur Durchführung des erfindungsgemäßen Filterverfahrens.

Bei 10 ist eine Zufuhr von Rohwasser vorgesehen. Dieses wird über eine entsprechende Zufuhrvorrichtung der Vorrichtung 200 zugeführt. Bei 20 erfolgt über eine geeignete Zuführeinrichtung die Zufuhr von zusätzlichen Filtermitteln. Die zusätzlichen Filtermittel sind vorliegend als Pulveraktivkohle ausgebildet. Die Pulveraktivkohle wird dem Rohwasser zugeführt. Um das Rohwasser samt Pulveraktivkohle zu einer Membranfiltereinheit 40 zu fördern, ist eine Fördervorrichtung 30 in Form einer Pumpe 31 vorgesehen. Die Membranfiltereinheit 40 weist mehrere Membranfilterelemente 41 auf, durch bzw. in welche das Rohwasser von einer Rohwasserseite 11 in Filterrichtung 12 auf eine Reinwasserseite 45 gefördert wird. Die Membranfiltereinheit 40 bildet mit den entsprechenden Anschlüssen und Zu- und Abführeinrichtungen eine erste Filterstufe 50 aus. Über die Abfuhr 60 wird das gewonnene Reinwasser auf der Reinwasserseite 45 von der Membranfiltereinheit 40 zur weiteren Verwendung abgeführt. Zur Reinigung der Membranfiltereinheit 40 wird von dem zuvor beschriebenen Filterbetrieb auf einen Rückspülbetrieb umgeschaltet. In dem Rückspülbetrieb wird das gewonnene Reinwasser bei 65 in Spülrichtung, das heißt entgegen der Filterrichtung 12 in die Membranfiltereinheit 40 über eine Fördereinrichtung, die in der Figur als Pumpe 32 ausgebildet ist, gefördert. Durch diesen Spülvorgang werden an und/oder in den Membranfilterelementen 41 anhaftende Verschmutzungen - gewollte oder ungewollte - wie die Pulveraktivkohle und/oder Schmutzpartikel abgelöst. Unterstützt wird dieser Spülvorgang durch Zufuhr von scherkrafterhöhenden Mitteln, die hier schematisch bei 70 eingezeichnet sind, und die als Druckluft über die Pumpe 31 der Membranfiltereinheit 40 zugeführt werden. Unterstützt durch die Druckluft erfolgt ein verbessertes Reinigen der Membranfilterelemente 41. Hierbei wird das Spülfluid mit der an den Membranfilterelementen 41 anhaftenden Verschmutzung verunreinigt. Durch die eingeblasene Druckluft wird das verunreinigte Spülfluid entgegen der Schwerkraft aufgeschwemmt. An einer bei 80 dargestellten Spülfluidabführung wird das verunreinigte Spülfluid, welches vorliegend als schlammhaltiges Wasser ausgebildet ist, zu einer zweiten Filterstufe 100 geführt. In der zweiten Filterstufe 100 wird das verunreinigte Fluid zunächst in einen Sedimentationsbehälter 110 geleitet. Dort wird der Schlamm 101 zumindest teilweise von dem Wasser mittels Sedimentation getrennt. Der Schlamm 101, welches sich in dem Sedimentationsbehälter 110 absetzt, wird zur weiteren Verwendung bei 120 abgeführt. Das Wasser wird bei 130 ebenfalls abgeführt. Hierzu ist eine Pumpe 140 vorgesehen. Die Pumpe 140 fördert das Wasser aus dem Sedimentationsbehälter 110 in eine weitere Membranfiltereinheit 150. Hier erfolgt der Filtrationsvorgang analog zu der ersten Filterstufe 50. Das in der zweiten Filterstufe 100 gewonnene Reinwasser oder Filtrat wird bei 160 aus der Membranfiltereinheit 150 im Filterbetrieb in Filterrichtung abgeführt. Um einen wirkungsvollen Kreislauf zu schaffen, wird das in der zweiten Filterstufte 100 gewonnene Reinwasser dem Rohwasser zur ersten Filterstufe 50 bei 170 zugeführt. Ein Kreislauf ist somit geschlossen. Im Filterbetrieb wird das in der zweiten Filterstufe 100 nach dem gleichen Prinzip wie in der ersten Filterstufe 50 gewonnene verunreinigte Spülfluid bei 180 abgeführt und bei 190 dem aus der ersten Filterstufe 50 entnommenen verunreinigten Spülfluid zur weiteren Zufuhr zur zweiten Filterstufe 100 zugeführt. Auf diese Weise ist ein zweiter Kreislauf geschlossen. In die Leitung bei 160, das heißt bei der Abfuhr des in der zweiten Filterstufe 100 gewonnenen Reinfluids zu dem Rohwasser der ersten Filterstufe 50 wird gemäß der vorliegenden Figur Spülfluid oder Spülwasser bei 65 (Zufuhr) über eine weitere Fördereinrichtung, die hier als Pumpe 141 ausgebildet ist, hinzugefügt. Auf diese Weise kann die zweite Filterstufe ebenfalls im Filter- und Rückspülbetrieb betrieben werden.

### Bezugszeichenliste

- 10: Zufuhr (Rohwasser, erste Filterstufe)
- 11: Rohwasserseite, Rohfluidseite
- 12: Filterrichtung
- 20: Zuführeinrichtung (Pulveraktivkohle, erste Filterstufe)
- 30: Fördervorrichtung
- 31: Pumpe (1, Rohwasser/-fluid)
- 32: Pumpe (2, Spülwasser/-fluid
- 40: Membranfiltereinheit
- 41: Membranfilterelemente
- 45: Reinwasserseite
- 50: Filterstufe (erste)
- 60: Abfuhr (Spülfluid)
- 65: Zufuhr (Spülfluid)
- 70: Zufuhr (scherkrafterhöhende Mittel, Druckluft)
- 80: Spülfluidabführung
- 100: Filterstufe (zweite)
- 101: Schlamm
- 110: Sedimentationsbehälter
- 120: Abfuhr (Schlamm, Sedimentationsbehälter)
- 130: Abfuhr (Wasser, Sedimentationsbehälter)
- 140: Pumpe (2, zweite Filterstufe, Rohwasser/-fluid)
- 141: Pumpe (2, zweite Filterstufe, Spülwasser/-fluid)
- 150: Membranfiltereinheit (zweite Filterstufe)
- 160: Abfuhr (zweite Filterstufe, Filtrat)
- 170: Zufuhr (zweite Filterstufe zur ersten Filterstufe)
- 180: Abfuhr (zweite Filterstufe, verunreinigtes Spülfluid)
- 190: Zufuhr (zweite Filterstufe, verunreinigte Spülfluid)
- 200: Vorrichtung

## Patentansprüche

1. Verfahren zum Filtern eines eine Verschmutzung enthaltenden Rohfluids mittels mindestens einer Membranfiltereinheit (40), wobei
die Membranfiltereinheit (40) mindestens ein Membranfilterelement mit Membranporen aufweist, durch welche das Rohfluid gefördert wird und in dessen Membranporen oder an deren Membranoberflächen sich Schmutzpartikel ansammeln, wobei in einem Filterbetrieb das verschmutzte Rohfluid von einer Rohfluidseite (11) in eine Filterrichtung (12) durch die Membranfiltereinheit (40) zu einer Reinfluidseite gefördert wird, wobei das Rohfluid über eine Pumpe der Membranfiltereinheit (40) zugeführt wird, wobei der Druck, mit dem das Rohfluid der Membranfiltereinheit (40) zugeführt wird, beliebig wählbar ist, und der Filterbetrieb mit einem IN/OUT-Prinzip erfolgt, wobei das Rohfluid von innen nach außen das mindestens eine Membranfilterelement der Membranfiltereinheit (40) durchläuft, um so auf der Reinfluidseite ein von Verschmutzungen im Wesentlichen gereinigtes Reinfluid zu erzeugen, und
in einem Rückspülbetrieb ein Spülfluid in eine Rückspülrichtung durch die Membranfiltereinheit (40) gefördert wird, und der Rückspülbetrieb mit einem OUT/IN-Prinzip erfolgt, wobei das Spülfluid von außen nach innen in das mindestens eine Membranfilterelement der Membranfiltereinheit (40) hineingedrückt wird, um die Membranfiltereinheit (40) von der gefilterten Verschmutzung zu reinigen, wobei im Filterbetrieb ein zusätzliches Filtermittel dem Rohfluid auf der Rohfluidseite (11) zugefügt wird, um das Filtern zu verbessern und wobei im Rückspülbetrieb ein zusätzlich scherkrafterhöhendes Mittel, Druckluft, in die Membranfiltereinheit (40) eingeblasen wird, um im Rückspülbetrieb die Membranfiltereinheit (40) von der Verschmutzung und dem zusätzlichen Filtermittel zu reinigen, wobei als zusätzliches Filtermittel pulverförmige Aktivkohle zugefügt wird, wobei für ein verbessertes Rückspülen der Druck des Spülfluids und der Druckluft aufeinander abgestimmt werden, wobei das Zuführen der Druckluft oder der scherkrafterhöhenden Mittel und des Spülfluids in dem Rückspülbetrieb in einem Druckverhältnis zueinander erfolgt, bei dem der Druck des scherkrafterhöhenden Mittels den Druck des Spülfluids nicht um mehr als 30% übersteigt, wobei das Zuführen der Druckluft von der Rohwasserseite her erfolgt.

2. Verfahren nach Anspruch 1, **dadurch gekennzeichnet, dass** im Rückspülbetrieb die Verschmutzung samt zusätzlichem Filtermittel mit dem Spülfluid und/oder dem scherkrafterhöhenden Mittel bzw. der Druckluft aus der Membranfiltereinheit (40) in mindestens eine weitere Filterstufe (100) gefördert und dort gefiltert werden, sodass dort wieder Reinwasser entsteht.

3. Verfahren nach einem der vorherigen Ansprüche 1 oder 2, **dadurch gekennzeichnet, dass** das Filtern und Rückspülen in der mindestens einen weiteren Filterstufe (100) wie in der ersten Filterstufe (50) durchgeführt wird.

4. Verfahren nach einem der vorherigen Ansprüche 1 bis 3, **dadurch gekennzeichnet, dass** das in der weiteren Filterstufe (100) gewonnene Reinfluid dem Reinfluid aus der ersten Filterstufe (50) zugefügt wird.

5. Verfahren nach einem der vorherigen Ansprüche 1 bis 4, **dadurch gekennzeichnet, dass** die in einer weiteren Filterstufe (100) entstandene Verschmutzung einschließlich zusätzlichem Filtermittel samt Spülfluid und scherkrafterhöhendem Mittel, insbesondere Druckluft, in einem Sedimentationsbehälter (110) sedimentiert werden, sodass ein Sedimentschlamm entsteht.

6. Verfahren nach einem der vorherigen Ansprüche 1 bis 5, **dadurch gekennzeichnet, dass** der Sedimentschlamm dem Rohfluid einer vorderen Filterstufe (50) zugeführt wird.

7. Vorrichtung (200) zum Filtern von Rohfluid mittels mindestens einer Membranfiltereinheit (40), wobei die Membranfiltereinheit (40) mindestens ein Membranfilterelement mit Membranporen aufweist, durch welche das Rohfluid gefördert wird und in dessen Membranporen oder an deren Membranoberflächen sich Schmutzpartikel ansammeln, wobei die Vorrichtung folgende Mittel zur Durchführung eines Verfahrens nach einem der vorherigen Ansprüche 1 bis 6 aufweist: eine Filterstufe (50) mit mindestens einer Membranfiltereinheit (40), die auf einer Rohfluidseite (11) mit einer Rohfluidzuführung fluidisch verbunden ist und die ausgebildet ist, in einem Filterbetrieb Rohfluid in Filterrichtung (12) durch die Membranfiltereinheit (40) zu fördern, um so auf einer Reinfluidseite Reinfluid zu erzeugen, und die auf der Reinfluidseite mit einer Spülfluidzuführung fluidisch verbunden ist und die ausgebildet ist, in einem Rückspülbetrieb Spülfluid in eine Rückspülrichtung durch die Membranfiltereinheit (40) zu fördern, um die Membranfiltereinheit (40) von gefilterten Schmutzpartikeln zu reinigen, wobei weiter eine Zuführung (70) zum Zuführen von scherkrafterhöhenden Mitteln, eine Druckluftzuführung, vorgesehen ist, die ausgebildet ist, um im Rückspülbetrieb scherkrafterhöhende Mittel einzublasen, wobei weiter eine Mittelzuführung (20) vorgesehen ist, die ausgebildet ist, um in dem Filterbetrieb ein zusätzliches Filtermittel dem Rohfluid zuzufügen, um das Filtern zu verbessern, wobei eine Pumpe vorgesehen ist, die das Rohfluid der Membranfiltereinheit (40) zuführt, über welche der Druck, mit dem das Rohfluid der Membranfiltereinheit (40) zugeführt wird, beliebig wählbar

8. Vorrichtung (200) nach Anspruch 7, **dadurch gekennzeichnet, dass** mehrere miteinander gekoppelte Filterstufen (50, 100) vorgesehen sind, deren korrespondierende Reinfluidseiten und/oder Rohfluidseiten zumindest teilweise miteinander gekoppelt oder koppelbar sind.

9. Verwendung einer pulverförmigen Aktivkohle im Rohfluid in einer Vorrichtung (200) nach einem der Ansprüche 7 bis 8 und/oder einem Verfahren nach einem der Ansprüche 1 bis 6.

## Claims

1. Method for filtering a raw fluid containing a contamination by means of at least one membrane filter unit (40), wherein
the membrane filter unit (40) comprises at least one membrane filter element having membrane pores through which the raw fluid is conveyed and in the membrane pores of which or on the membrane surfaces of which dirt particles accumulate, wherein in a filtering operation the contaminated raw fluid is conveyed from a raw fluid side (11) in a filtering direction (12) through the membrane filter unit (40) to a clean fluid side, wherein the raw fluid is supplied to the membrane filter unit (40) via a pump, wherein the pressure with which the raw fluid is supplied to the membrane filter unit (40) can be selected as desired, and the filtering operation is carried out with an IN/OUT principle, wherein the raw fluid passes through the at least one membrane filter element of the membrane filter unit (40) from the inside to the outside in order to generate a clean fluid on the clean fluid side that is substantially cleaned of contaminants, and in a backflushing operation a flushing fluid is conveyed through the membrane filter unit (40) in a backflushing direction, and the backflushing operation is carried out with a OUT/IN principle, wherein the flushing fluid is forced into the at least one membrane filter element of the membrane filter unit (40) from the outside to the inside in order to clean the membrane filter unit (40) of the filtered contamination, wherein in the filtering operation an additional filter medium is added to the raw fluid on the raw fluid side (11) in order to improve the filtering, and wherein in the backflushing operation an additional shear-force-increasing agent, compressed air, is blown into the membrane filter unit (40) in order to clean the membrane filter unit (40) of the contamination and the additional filter medium in the backflushing operation, wherein powdered activated carbon is added as the additional filter medium, wherein the pressure of the flushing fluid and of the compressed air are coordinated with one another for improved backflushing, wherein the compressed air or the shear-force-increasing agent and the flushing fluid are supplied in the backflushing operation in a pressure ratio to one another in which the pressure of the shear-force-increasing agent does not exceed the pressure of the flushing fluid by more than 30%, wherein the compressed air is supplied from the raw water side.

2. Method according to claim 1, **characterized in that** in the backflushing operation, the contamination together with the additional filter medium is conveyed with the flushing fluid and/or the shear-force-increasing agent or the compressed air from the membrane filter unit (40) into at least one further filter stage (100) and filtered there, so that pure water is produced there again.

3. Method according to either of the preceding claims 1 and 2,
**characterized in that** the filtering and backflushing are carried out in the at least one further filter stage (100) as in the first filter stage (50).

4. Method according to any of the preceding claims 1 to 3,
**characterized in that** the clean fluid obtained in the further filter stage (100) is added to the clean fluid from the first filter stage (50).

5. Method according to any of the preceding claims 1 to 4,
**characterized in that** the contamination produced in a further filter stage (100), including additional filter medium together with flushing fluid and shear-force-increasing agent, in particular compressed air, is sedimented in a sedimentation tank (110), so that a sediment sludge is formed.

6. Method according to any of the preceding claims 1 to 5,
**characterized in that** the sediment sludge is supplied to the raw fluid of a front filter stage (50).

7. Device (200) for filtering raw fluid by means of at least one membrane filter unit (40), wherein the membrane filter unit (40) comprises at least one membrane filter element having membrane pores through which the raw fluid is conveyed and in the membrane pores of which or on the membrane surfaces of which dirt particles accumulate, wherein the device comprises the following means for carrying out a method according to any of the preceding claims 1 to 6: a filter stage (50) having at least one membrane filter unit (40), which is fluidically connected on a raw fluid side (11) to a raw fluid supply line and which is designed, in a filtering operation, to convey raw fluid in the filtering direction (12) through the membrane filter unit (40) in order to generate clean fluid on a clean fluid side, and which is fluidically connected on the clean fluid side to a flushing fluid supply line and which is designed, in a backflushing operation, to convey flushing fluid in a backflushing direction through the membrane filter unit (40) in order to clean the membrane filter unit (40) of filtered dirt particles, wherein further a supply line (70) for supplying shear-force-increasing agents, a compressed-air supply line, is provided, which is designed to blow in shear-force-increasing agents in the backflushing operation, wherein further a means supply line (20) is provided, which is designed to add an additional filter medium to the raw fluid in the filtering operation in order to improve filtering, wherein a pump is provided, which supplies the raw fluid to the membrane filter unit (40), via which pump the pressure with which the raw fluid is supplied to the membrane filter unit (40) can be selected as desired.

8. Device (200) according to claim 7, **characterized in that** a plurality of filter stages (50, 100) coupled to one another are provided, the corresponding clean fluid sides and/or raw fluid sides of which are or can be coupled to one another at least in part.

9. Use of a powdered activated carbon in the raw fluid in a device (200) according to any of claims 7 to 8 and/or in a method according to any of claims 1 to 6.

## Revendications

1. Procédé pour la filtration d'un fluide brut contenant des salissures au moyen d'au moins une unité à filtre à membrane (40), dans lequel
l'unité à filtre à membrane (40) présente au moins un élément formant filtre à membrane comportant des pores de membrane à travers lesquels le fluide brut est transporté et dans les pores de membrane duquel ou sur les surfaces de membrane duquel s'accumulent des particules de salissures, dans lequel, dans un mode de fonctionnement de filtration, le fluide brut sale est transporté d'un côté de fluide brut (11), dans un sens de filtration (12), à travers l'unité à filtre à membrane (40) jusqu'à un côté de fluide pur, dans lequel le fluide brut est amené à l'unité à filtre à membrane (40) par l'intermédiaire d'une pompe, dans lequel la pression avec laquelle le fluide brut est amené à l'unité à filtre à membrane (40) peut être sélectionnée à volonté, et le mode de fonctionnement de filtration est effectué selon un principe ENTRÉE/SORTIE, dans lequel le fluide brut traverse de l'intérieur vers l'extérieur l'au moins un élément formant filtre à membrane de l'unité à filtre à membrane (40) afin de produire ainsi, du côté de fluide pur, un fluide pur sensiblement nettoyé des salissures, et, dans un mode de fonctionnement de lavage à contre-courant, un fluide de lavage est transporté dans un sens de lavage à contre-courant à travers l'unité à filtre à membrane (40), et le mode de fonctionnement de lavage à contre-courant est effectué avec un principe SORTIE/ENTRÉE, dans lequel le fluide de lavage est pressé de l'extérieur vers l'intérieur dans l'au moins un élément formant filtre à membrane de l'unité à filtre à membrane (40) afin de nettoyer l'unité à filtre à membrane (40) des salissures filtrées, dans lequel, dans le mode de fonctionnement de filtration, un moyen de filtration supplémentaire est ajouté au fluide brut du côté de fluide brut (11) pour améliorer la filtration et dans lequel, dans le mode de fonctionnement de lavage à contre-courant, un moyen supplémentaire augmentant la force de cisaillement, de l'air comprimé, est insufflé dans l'unité à filtre à membrane (40) pour nettoyer, dans le mode de fonctionnement de lavage à contre-courant, l'unité à filtre à membrane (40) des salissures et du moyen de filtration supplémentaire, dans lequel du charbon actif en poudre est ajouté comme moyen de filtration supplémentaire, dans lequel, pour un lavage à contre-courant amélioré, la pression du fluide de lavage et l'air comprimé sont adaptés l'un à l'autre, dans lequel l'amenée de l'air comprimé ou du moyen augmentant la force de cisaillement et du fluide de lavage dans le mode de fonctionnement de lavage à contre-courant est effectuée dans un rapport de pression l'un par rapport à l'autre dans lequel la pression du moyen augmentant la force de cisaillement ne dépasse pas de plus de 30 % la pression du fluide de lavage, dans lequel l'amenée de l'air comprimé est effectuée depuis le côté d'eau brute.

2. Procédé selon la revendication 1, **caractérisé en ce que,** dans le mode de fonctionnement de lavage à contre-courant, les salissures ainsi que le moyen de filtration supplémentaire sont transportés avec le fluide de lavage et/ou le moyen augmentant la force de cisaillement ou l'air comprimé depuis l'unité à filtre à membrane (40) dans au moins un étage de filtration supplémentaire (100) et y sont filtrés, de sorte qu'il s'y forme à nouveau de l'eau pure.

3. Procédé selon l'une des revendications précédentes 1 ou 2,
**caractérisé en ce que** la filtration et le lavage à contre-courant sont réalisés dans l'au moins un étage de filtration supplémentaire (100) comme dans le premier étage de filtration (50).

4. Procédé selon l'une des revendications précédentes 1 à 3,
**caractérisé en ce que** le fluide pur obtenu dans l'étage de filtration supplémentaire (100) est ajouté au fluide pur provenant du premier étage de filtration (50).

5. Procédé selon l'une des revendications précédentes 1 à 4,
**caractérisé en ce que** les salissures produites dans un étage de filtration supplémentaire (100), y compris le moyen de filtration supplémentaire ainsi que le fluide de lavage et le moyen d'augmentation de la force de cisaillement, en particulier l'air comprimé, sont sédimentés dans un récipient de sédimentation (110), de sorte qu'une boue sédimentaire est produite.

6. Procédé selon l'une des revendications précédentes 1 à 5,
**caractérisé en ce que** la boue sédimentaire est ajoutée au fluide brut d'un étage de filtration amont (50).

7. Dispositif (200) pour la filtration de fluide brut au moyen d'au moins une unité à filtre à membrane (40), dans lequel l'unité à filtre à membrane (40) présente au moins un élément formant filtre à membrane comportant des pores de membrane à travers lesquels le fluide brut est transporté et dans les pores de membrane duquel ou sur les surfaces de membrane duquel s'accumulent des particules de salissures, dans lequel le dispositif présente les moyens suivants pour la réalisation d'un procédé selon l'une des revendications précédentes 1 à 6 : un étage de filtration (50) comportant au moins une unité à filtre à membrane (40) qui est reliée fluidiquement à une amenée de fluide brut d'un côté de fluide brut (11) et qui est conçue pour transporter, dans un mode de fonctionnement de filtration, du fluide brut dans un sens de filtration (12) à travers l'unité à filtre à membrane (40) afin de produire ainsi du fluide pur d'un côté de fluide pur, et qui est reliée fluidiquement, du côté de fluide pur, à une amenée de fluide de lavage et qui est conçue pour, dans un mode de fonctionnement de lavage à contre-courant, acheminer du fluide de lavage dans un sens de lavage à contre-courant à travers l'unité à filtre à membrane (40) afin de nettoyer l'unité à filtre à membrane (40) des particules de salissures filtrées, dans lequel une amenée (70) pour l'amenée de moyens augmentant la force de cisaillement, une amenée d'air comprimé, est en outre prévue, laquelle est conçue pour insuffler un moyen augmentant la force de cisaillement dans le mode de fonctionnement de lavage à contre-courant, dans lequel une amenée de moyen (20) est en outre prévue, laquelle est conçue pour ajouter un moyen de filtration supplémentaire au fluide brut dans le mode de fonctionnement de filtration afin d'améliorer la filtration, dans lequel une pompe qui amène le fluide brut à l'unité à filtre à membrane (40) est prévue, par l'intermédiaire de laquelle pompe la pression avec laquelle le fluide brut est amené à l'unité à filtre à membrane (40) peut être sélectionnée à volonté.

8. Dispositif (200) selon la revendication 7, **caractérisé en ce que** sont prévus plusieurs étages de filtration (50, 100) accouplés entre eux, dont les côtés de fluide pur et/ou les côtés de fluide brut correspondants sont accouplés ou peuvent être accouplés au moins partiellement entre eux.

9. Utilisation d'un charbon actif en poudre dans le fluide brut dans un dispositif (200) selon l'une des revendications 7 à 8 et/ou un procédé selon l'une des revendications 1 à 6.
